# EUROPEAN PATENT APPLICATION

(11) **EP 4 825 885 A1**
(43) Date of publication of application: **21.10.2026**
(21) Application number: 24903379.6
(22) Date of filing: 05.11.2024
(51) Int. Cl.: C08F 38/00, C08F 4/80, C08F 299/08, C08G 77/388

(54) **CURABLE SILICONE COMPOSITION CONTAINING DIYNE-CONTAINING AMINO-MODIFIED ORGANOPOLYSILOXANE COMPOUND**

(30) Priority: 14.12.2023 JP 2023211157
(71) Applicant: SHIN-ETSU CHEMICAL CO., LTD., Tokyo 100-0005 (JP)
(72) Inventor: TABATA, Yuji, Annaka-shi, Gunma 379-0224 (JP); KITAZAWA, Keita, Annaka-shi, Gunma 379-0224 (JP)
(74) Representative: Schicker, Silvia
(86) International application number: PCT/JP2024/039182
(87) International publication number: WO 2025/126719

(57) **Abstract**

The present invention is a curable silicone composition including: (A) an organopolysiloxane compound having a substituent represented by the following general formula (1) in a molecule: 100 parts by mass; and (B) a metal compound capable of catalyzing a [2+2+2] cycloaddition reaction : an effective amount (in the following formula, R¹ independently represents a substituted or unsubstituted monovalent hydrocarbon group or a hydrogen atom, R² independently represents a substituted or unsubstituted divalent hydrocarbon group, and R³ represents a divalent linking group). This provides a curable silicone composition that can advance the [2+2+2] cycloaddition reaction under a gentle condition, and a silicone cured product thereof.

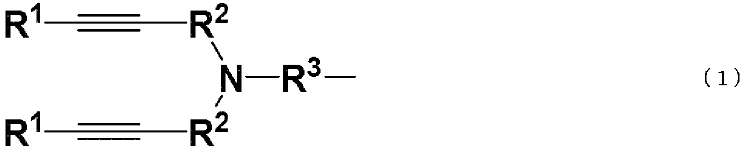

## Description

### TECHNICAL FIELD

The present invention relates to: a curable silicone composition containing an amino-modified organopolysiloxane compound that has diyne in a molecule and that is curable; a cured product thereof; and a method for manufacturing the composition.

### BACKGROUND ART

A silicone elastomer refers to an elastic material based on a silicone resin, and is widely used as a coating agent, a sealing agent, and a sealant for a semiconductor element because the silicone itself has excellent heat resistance and chemical resistance.

A curable silicone composition is a liquid silicone composition in use, and it can advance curing with heat, light, or moisture in the air as a trigger to form the silicone elastomer. Specific examples of the curing form include an addition reaction utilizing radicals, an addition reaction by hydrosilylation, and a condensation reaction. The addition reaction by radicals, which commonly uses a peroxide, often requires high temperature for generating an initiating species, and surface curability may be poor because of curing inhibition due to oxygen. The addition reaction by hydrosilylation enables curing at normal temperature or curing with heating by adjusting a catalyst and a reaction controlling agent. Provided that curing failure may occur if a curing-inhibiting substance such as sulfur, phosphorus, a nitrogen compound, water, and an organic metal salt is mixed or contacted. In addition, the condensation reaction enables curing at normal temperature with utilizing moisture in the air, but a volume decreases with generating gas in curing, and causes poor depth-curability.

As the curable silicone composition, many materials are used around electric and electronic components and semiconductor elements. However, components that is weak to heat and that cannot be exposed to high temperature in mounting have increased among the electric and electronic components. Thus, there has been a demand for a curable silicone composition that can be cured under a gentle condition of 100°C or lower.

One of reactions usable as the curing system is a [2+2+2] cycloaddition reaction of alkynes in which a transition metal is used as a catalyst to form a carbon-carbon bond by the multiple bonds with each other. The [2+2+2] cycloaddition reaction, which is a reaction of forming an aromatic ring from three triple bonds, causes no byproduct gas in the reaction, and is an extremely useful reaction. However, almost no application example for the organopolysiloxane compound or a cured product thereof has been reported in the past. In addition, this reaction has a high activation barrier, and requires a high temperature of 100°C or higher for advancing the reaction when a catalyst stable at normal temperature is used. Meanwhile, to advance the reaction under a gentle condition of 100°C or lower, a highly active catalyst is needed to use. Such a catalyst, however, requires preparation in advance, or is deactivated under a normal humidity condition. Thus, it is difficult to use it as a composition or to store it in a long term at normal temperature or normal humidity (Non Patent Documents 1 to 3).

### CITATION LIST

### NON PATENT LITERATURE

Non Patent Document 1: Reppe, W. et al. Justus Liebigs Ann., 1948, 560, 104
Non Patent Document 2: Vollhardt, K. P. C. Angew. Chem. Int. Ed. Engl. 1984, 23, 539
Non Patent Document 3: Saito, S.; Yamamoto, Y. Chem. Rev. 2000, 100, 2901

### SUMMARY OF INVENTION

### TECHNICAL PROBLEM

In view of the above circumstances, an object of the present invention is to provide: a curable silicone composition that can advance the [2+2+2] cycloaddition reaction particularly under a gentle condition; and a silicone cured product thereof.

### SOLUTION TO PROBLEM

To solve the above problem, the present invention provides a curable silicone composition, comprising:
(A) an organopolysiloxane compound having a substituent represented by the following general formula (1) in a molecule: 100 parts by mass, 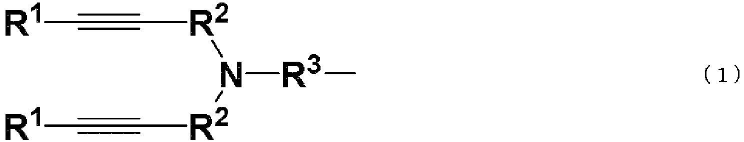 wherein R¹ independently represents a substituted or unsubstituted monovalent hydrocarbon group or a hydrogen atom, R² independently represents a substituted or unsubstituted divalent hydrocarbon group, and R³ represents a divalent linking group; and
(B) a metal compound capable of catalyzing a [2+2+2] cycloaddition reaction: an effective amount.

The curable silicone composition of the present invention as above can advance the [2+2+2] cycloaddition reaction under a gentle condition, and the composition can be cured to obtain the silicone cured product.

In the curable silicone composition of the present invention, R² in the general formula (1) preferably represents a methylene group, and also, R¹ in the general formula (1) preferably represents a hydrogen atom.

The organopolysiloxane compound containing the component (A) as above is easily synthesized.

In addition, the component (A) in the composition of the present invention is preferably an organopolysiloxane compound having two or more of the substituent represented by the general formula (1) in average in one molecule.

The component (A) as above has four or more ethynylene groups that are linked with each other via a nitrogen atom and that contribute to the [2+2+2] cycloaddition in average in one molecule, and more favorably advances the [2+2+2] cycloaddition reaction.

In the present invention, the curable silicone composition preferably further comprises (C) at least one inorganic filler or organic filler at 0.1 to 5,000 parts by mass based on 100 parts by mass of the component (A).

The component (C) as above can impart various properties such as thermal conductivity, heat resistance, a reinforcing property, electric conductivity, and designability to the curable silicone composition of the present invention, and can provide the uniform composition having not excessively high viscosity and handling ease.

In this case, the component (C) is preferably a filler composed of one or more materials selected from the group consisting of a metal, a metal oxide, a metal hydroxide, a metal nitride, a metal carbide, an allotrope of carbon, a resin, a dye, and a pigment.

The component (C) as above can yield the composition having desired properties according to the material.

In addition, the present invention provides a silicone cured product which is made by curing the above curable silicone composition.

The silicone cured product of the present invention is an elastic material, and the silicone itself has excellent heat resistance and chemical resistance.
Thus, the silicone cured product of the present invention is useful as a silicone elastomer used as a coating agent, a sealing agent, and a sealant for a semiconductor element.

In addition, the present invention provides a method for manufacturing a curable silicone composition, the method comprising a step of mixing:
(A) an organopolysiloxane compound having a substituent represented by the following general formula (1) in a molecule: 100 parts by mass, 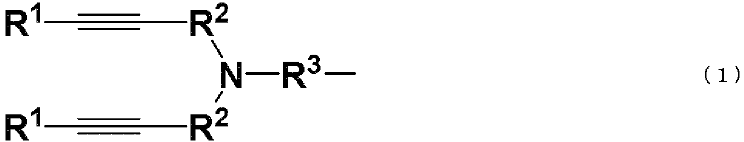 wherein R¹ independently represents a substituted or unsubstituted monovalent hydrocarbon group or a hydrogen atom, R² independently represents a substituted or unsubstituted divalent hydrocarbon group, and R³ represents a divalent linking group; and
(B) a metal compound capable of catalyzing a [2+2+2] cycloaddition reaction: an effective amount.

By the method for manufacturing a curable silicone composition of the present invention as above, the above silicone composition can be manufactured easily and efficiently.

### ADVANTAGEOUS EFFECTS OF INVENTION

The present invention can provide the organopolysiloxane compound and the silane compound that are useful for the [2+2+2] cycloaddition reaction by introducing the specific structure into the organopolysiloxane compound. Specifically, it can provide the silicone composition that can be cured under a gentle condition of 100°C or lower. The curing performance as above enables curing even with using a component that is weak to heat and that cannot be exposed to high temperature in mounting, and has high utility value as a material used around electric and electronic components and semiconductor elements. Then, the silicone cured product which is made curing this composition is an elastic material, and the silicone itself has excellent heat resistance and chemical resistance. Thus, it is useful as the silicone elastomer used as a coating agent, a sealing agent, and a sealant for a semiconductor element. Further, by the method for manufacturing a curable silicone composition of the present invention, the above composition can be manufactured easily and efficiently.

### DESCRIPTION OF EMBODIMENTS

As noted above, there has been a demand for development of the curable silicone composition that can be cured under a gentle condition of 100°C or lower without using a highly active catalyst, that is not deactivated under a normal humidity condition, and that is easily used as a composition and easily stored in a long term at normal temperature or normal humidity.

The present inventors have made earnest study to solve the above problems, and consequently found that the [2+2+2] cycloaddition reaction proceeds under a gentle condition by introducing a substituent with specific structure into an organopolysiloxane compound, which has led to the present invention.

Specifically, the present invention is a curable silicone composition, comprising:
(A) an organopolysiloxane compound having a substituent represented by the following general formula (1) in a molecule: 100 parts by mass, 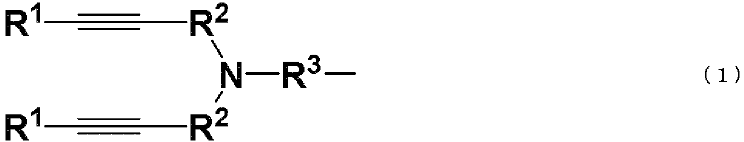 wherein R¹ independently represents a substituted or unsubstituted monovalent hydrocarbon group or a hydrogen atom, R² independently represents a substituted or unsubstituted divalent hydrocarbon group, and R³ represents a divalent linking group; and
(B) a metal compound capable of catalyzing a [2+2+2] cycloaddition reaction: an effective amount.

Hereinafter, the present invention will be described in detail, but the present invention is not limited thereto.

The present invention relates to: a curable silicone composition containing an amino-modified organopolysiloxane compound that has diyne in a molecule and that can be cured under a gentle condition of, for example, 100°C or lower with a [2+2+2] cycloaddition reaction and a metal catalyst capable of catalyzing the [2+2+2] cycloaddition reaction; a silicone cured product; and a method for manufacturing the composition as above.

### [Component (A)]

The organopolysiloxane compound being the component (A) of the present invention is an organopolysiloxane compound having a substituent represented by the following general formula (1) in a molecule. The component (A) as above is a compound having diyne, which has two carbon-carbon triple bonds, and this diyne contributes to the [2+2+2] cycloaddition.

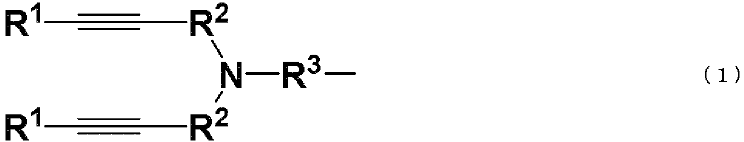

In the formula, R¹ independently represents a substituted or unsubstituted monovalent hydrocarbon group or a hydrogen atom, R² independently represents a substituted or unsubstituted divalent hydrocarbon group, and R³ represents a divalent linking group.

In the above formula (1), R¹ independently represents a substituted or unsubstituted monovalent hydrocarbon group or a hydrogen atom. Specific examples of the monovalent hydrocarbon group include: alkyl groups such as a methyl group, an ethyl group, a propyl group, an isopropyl group, a butyl group, an isobutyl group, a tert-butyl group, a pentyl group, a hexyl group, a cyclohexyl group, an octyl group, and a dodecyl group; aryl groups such as a phenyl group, a 1-naphthyl group, a 2-naphthyl group, and a tolyl group; aralkyl groups such as a benzyl group and a 2-phenylethyl group; and groups in which a part or all of hydrogen atoms in these groups are substituted with a halogen atom such as fluorine, chlorine, and bromine, such as a chloromethyl group and a 3,3,3-trifluoropropyl group. From the viewpoints of synthesis ease, etc., a methyl group, an ethyl group, a phenyl group, and a hydrogen atom are preferable, and a hydrogen atom is particularly preferable.

In the above formula (1), R² independently represents a substituted or unsubstituted divalent hydrocarbon group. R² may represent the substituent itself represented by the general formula (1) (this case forms a dendric structure via a tertiary nitrogen atom). Specific examples of the divalent hydrocarbon group include alkylene groups such as a methylene group, an ethylene group, an ethylidene group, a propylene group, a trimethylene group, a propylidene group, and an isopropylidene group. From the viewpoints of synthesis ease, etc., a methylene group and an ethylene group are preferable, and a methylene group is particularly preferable.

In the above formula (1), R³ represents a divalent linking group. The divalent linking group is not particularly limited, and examples thereof include a linear chain or branched chain aliphatic hydrocarbon group, an aliphatic hydrocarbon group having a ring in the structure, and an aromatic hydrocarbon group. A number of carbon atoms in the aliphatic/aromatic hydrocarbon group may be 1 to 20, for example. The aliphatic hydrocarbon group or the aromatic hydrocarbon group may have a substituent, and examples of the substituent include an alkyl group, an alkoxy group, a halogen atom, a halogenated alkyl group, a hydroxy group, and a carbonyl group. In addition, a part of carbon atoms or hydrogen atoms constituting the hydrocarbon group may be substituted with a bond such as an ether bond, an ester bond, a carbonyl bond, a carbonate bond, a carbamate bond, an amino bond, a urethane bond, and a urea bond. The divalent linking group is preferably the linear chain aliphatic hydrocarbon group, the aromatic hydrocarbon group, or a hydrocarbon group having an amino bond, and particularly preferably the linear chain aliphatic hydrocarbon group. A number of carbon atoms in the linear chain aliphatic hydrocarbon group is preferably 1 to 20, more preferably 1 to 10, and particularly preferably 1 to 3.

Specific examples of the above substituent include the following structure.

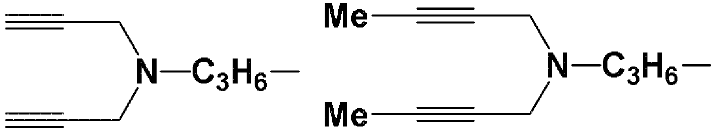

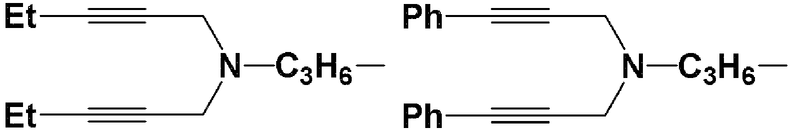

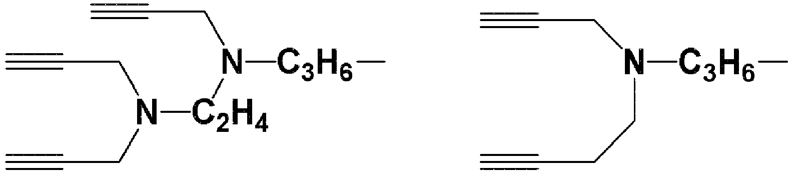

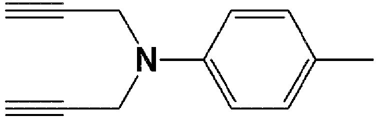

Note that, in the structural formulae described above, Me represents a methyl group, Et represents an ethyl group, and Ph represents a phenyl group.

Among the above substituents, the following structure is particularly preferable from the viewpoints of synthesis ease and reactivity to the [2+2+2] cycloaddition reaction.

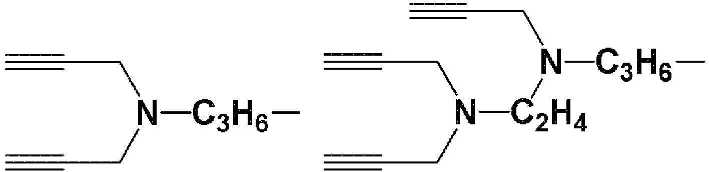

The component (A) preferably has one or more of, particularly preferably two or more of, the substituent represented by the above formula (1) in one molecule. The component (A) as above has at least two, more preferably four or more, ethynylene groups that contribute to the [2+2+2] cycloaddition, and these are linked with each other via a nitrogen atom, and is easily synthesized and favorably advances the [2+2+2] cycloaddition reaction.

In addition, the component (A) in the present invention is preferably an organopolysiloxane compound having two or more of the substituent represented by the general formula (1) in average in one molecule. Here, the phrase "having two or more in average in one molecule" means that the compound of the component (A) has two or more of the above substituent in the molecule when the compound is one type, and when a number of types is two or more, summation of a number of the above substituent in each molecule and a mole fraction of each molecule is two or more.

The molecular structure of the component (A) is not particularly limited as long as it is a compound having the substituent represented by the formula (1), and examples thereof include a linear chain structure, a branched chain structure, and a linear chain structure partially having a branched structure or a cyclic structure. The component (A) particularly preferably has a linear chain structure in which the main chain is composed of repetition of a diorganosiloxane unit and both terminals of the molecular chain are blocked with a triorganosiloxy group. This organopolysiloxane having a linear chain structure may partially have a branched structure or a cyclic structure. As for the substituent represented by the above formula (1), the triorganosiloxy group at the above terminals of the molecular chain may have it, or the above partially branched or cyclic structure may have it.

The component (A) has an average molecular weight of preferably 150 to 500,000 g/mol, particularly preferably 250 to 150,000 g/mol. The average molecular weight here means a sum of products of molecular weights and mole fractions of each compound, namely a number-average molecular weight. The average molecular weight can be measured by gel permeation chromatography (GPC) with tetrahydrofuran as an eluent and polystyrene as a standard substance.

A kinematic viscosity of the compound (A) at 25°C is preferably within a range of 1 to 500,000 mm²/s, and more preferably 5 to 300,000 mm²/s. This kinematic viscosity being 10 to 100,000 mm²/s yields the composition having more excellent strength, flowability, and operability. Note that the kinematic viscosity is a value measured with an Ostwald viscometer at 25°C.

The component (A) preferably has an amine value of 0.1 to 2000 mgKOH/g. The amine value refers to a number of milligram of potassium hydroxide (KOH: 56.11) equivalent to an acid that is needed to neutralize 1 g of a sample.

Examples of the organopolysiloxane compound of the present invention satisfying the above requirements include an organopolysiloxane compound represented by the following general formula (2).

(R⁴₃SiO_{1/2})ₐ(R⁴₂SiO_{2/2})_{b}(R₄SiO_{3/2})_{c}(SiO_{4/2})_{d}

In the formula, R⁴ each independently represents an unsubstituted or substituted monovalent hydrocarbon group, provided that at least one R⁴ represents the substituent represented by the above formula (1), and a+b+c+d is a number of 0 or more. It is to be noted that in a case of the linear chain organopolysiloxane compound, a=2, "b" preferably represents 2 or more and 800 or less, and c=d=0. In a case of the branched chain organopolysiloxane compound, "a" or "b" represents a number of 0 or more, "b" preferably represents 2 or more and 800 or less, and "c" or "d" represents 1 or more. In a case of the cyclic organopolysiloxane compound, a=0, "b" is preferably within a range of 3 to 10, further preferably within a range of 3 to 6, and "c" or "d" represents a number of 0 or more.

As the above organopolysiloxane compound, at least one R⁴ in the terminal M unit (R⁴₃SiO_{1/2}) or the D unit (R⁴₂SiO_{2/2}) in the above general formula (2) is preferably the substituent represented by the above formula (1).

Specific examples of the above organopolysiloxane compound and silane compound include those represented by the following structural formulae.

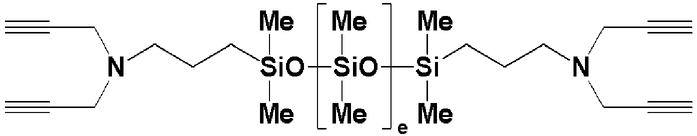

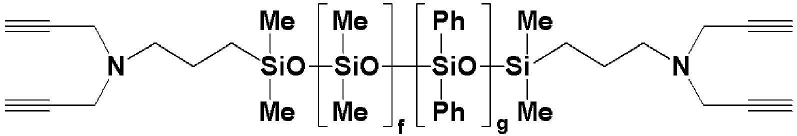

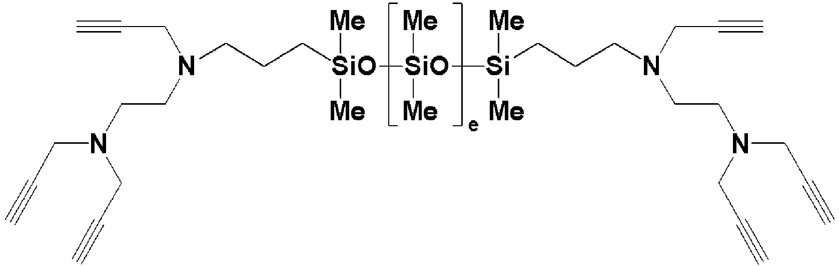

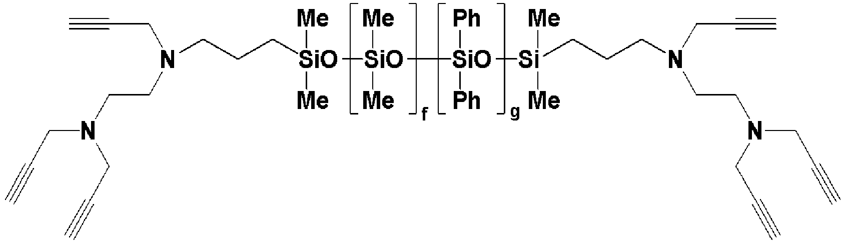

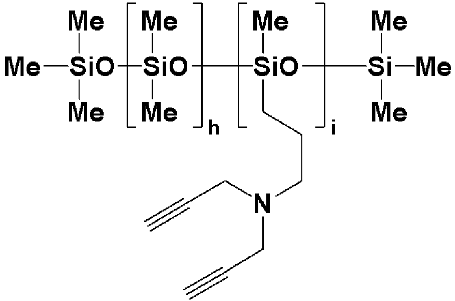

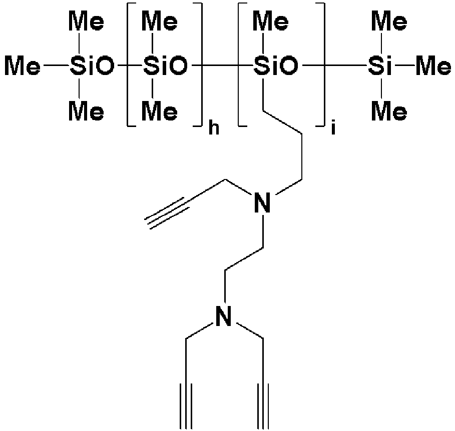

In the formulae, "e" or "f" or "g" represents a number of 0 or more, and "e" or "f" more preferably represents a number of 2 or more and 800 or less. "g" more preferably represents a number of 0 or more and 800 or less. "h" or "i" represents 0 or more, and h+i is preferably 20 or more and 800 or less.

It is to be noted that in the above-described structural formulae, Me represents a methyl group and Ph represents a phenyl group.

A [2+2+2] cycloaddition reaction using a metal catalyst is a direct and atomically efficient method that can synthesize a condensed polycyclic aromatic compound.

The component (A) of the present invention advances the [2+2+2] cycloaddition reaction with the metal compound capable of catalyzing the [2+2+2] cycloaddition reaction, and has a particular advantage that the reaction proceeds under a relatively gentle condition of 100°C or lower.

The component (A) may be used singly, or two or more may be combined for use.

### [Component (B)]

The component (B) is a metal compound capable of catalyzing the [2+2+2] cycloaddition reaction, and blended as a catalyst to cure the curable silicone composition of the present invention. Here, the phrase "capable of catalyzing the [2+2+2] cycloaddition reaction" means having a catalytic activity to the [2+2+2] cycloaddition reaction. Hereinafter, the above metal compound is also simply referred to as "catalyst", "metal catalyst", etc.

The metal compound of the component (B) may be constituted of a center metal atom, a ligand, and a counterion. Examples of the center metal atom include the group 4 to the group 12 atoms. Specific examples thereof include: the group 4 atoms (titanium (Ti), zirconium (Zr), and hafnium (Hf)); the group 5 atoms (vanadium (V), niobium (Nb), and tantalum (Ta)); the group 6 atoms (chromium (Cr), molybdenum (Mo), and tungsten (W)); the group 7 atoms (manganese (Mn) and rhenium (Re)); the group 8 atoms (iron (Fe), ruthenium (Ru), and Osmium (Os)); the group 9 atoms (cobalt (Co), rhodium (Rh), and iridium (Ir)); the group 10 atoms (nickel (Ni), palladium (Pd), and platinum (Pt)); and the group 12 atoms (zinc (Zn)). Among these, Ti, Nb, Ta, Co, Rh, Fe, Ru, Ir, or Pd is preferable, and Co, Rh, or Pd is more preferable. The center metal atom may be one type or two or more types, and in a case of two or more types, the metal may be all the same metal or may be a combination of different metals.

The ligand is not particularly limited, and examples thereof include: carbonyl (CO); ammonia; water; halide ions such as F⁻, Cl⁻, Br⁻, and I⁻; anions such as a cyanide ion (CN⁻), PF₆⁻, BF₄⁻, NO₃⁻, BPh₄⁻, and ClO₄⁻; onium cations such as ammonium, sulfonium, and phosphonium; organophosphorus compounds such as triphenylphosphine and 1,2-bis(diphenylphosphino)ethane; olefins such as a cyclopentadienyl (Cp) group, a pentamethylcyclopentadienyl (Cp^{*}) group, a cyclooctadiene (COD) group, a cyclooctatriene (COT) group, a norbornene group, and a norbornadiene group; α,β-unsaturated ketones such as dibenzylideneacetone; acyl groups such as an acetyl group and a benzoyl group; β-diketones such as acetylacetone (acac); β-ketoesters such as ethyl acetoacetate; amines such as an alkylamine, an alkylene diamine, aniline, and pyridine; or alkoxy groups. Among these, carbonyl (CO), halide ions, a cyclopentadienyl (Cp) group, triphenylphosphine, and dibenzylideneacetone are preferable.

The ligand may be a monodentate ligand or a bidentate or higher-dentate polydentate ligand.

The counterion is not particularly limited, and examples thereof include: halide ions; a cyanide ion; carbonates; anions such as PF₆⁻, BF₄⁻, NO₃⁻, BPh₄⁻, and ClO₄⁻; and onium cations such as ammonium, sulfonium, and phosphonium, which are also the ligand. Among these, Cl⁻ is more preferable.

The metal compound capable of catalyzing the [2+2+2] cycloaddition reaction is particularly preferably cyclopentadienylcobalt(I) dicarbonyl, tetrakis(triphenylphosphine)palladium(0), tris(dibenzylideneacetone)dipalladium(0), and tris(triphenylphosphine)rhodium(I) chloride.

The metal compound may be diluted for use by dissolution or dispersion with a solvent as necessary. For such a solvent, a known solvent may be used, and examples thereof include: alcohols such as methanol; ketones such as acetone; hydrocarbon solvents such as hexane, toluene, and xylene; halogenated hydrocarbon solvents such as methylene chloride, chloroform, and 1,2-dichloroethane; esters such as ethyl acetate; and polysiloxanes such as dimethylpolysiloxane having both terminals being blocked with a trimethylsilyl group and having a kinematic viscosity at 25°C of 50,000 mm²/s.

A concentration of the metal compound (a catalyst concentration) in the solvent may be set as necessary, and may be set to 0.01 to 10 mass%, preferably 0.1 to 5 mass%, in terms of mass of the center metal, for example. Adding the diluted product to have a blending amount of the metal compound capable of catalyzing the [2+2+2] cycloaddition reaction, described later, can prepare the desired composition.

The blending amount of the metal compound capable of catalyzing the [2+2+2] cycloaddition reaction is an effective amount as the catalyst, namely an effective amount needed to enhance the curing reaction to cure the curable silicone composition of the present invention. The blending amount is preferably 0.1 to 10,000 ppm, more preferably 1 to 5,000 ppm, and further preferably 10 to 3,000 ppm based on mass in terms of the center metal atom based on the entire composition. When the amount of the catalyst is equal to or more than the above lower limit value, the effect as the catalyst can be obtained. When the amount is equal to or lower than the above upper limit value, the catalyst effect is sufficient, which is economic.

### [Component (C)]

The curable silicone composition of the present invention may contain an inorganic filler or an organic filler as the component (C) as necessary. The component (C) can impart various properties such as thermal conductivity, heat resistance, a reinforcing property, electric conductivity, and designability to the curable silicone composition of the present invention. The component (C) is preferably a filler composed of at least one material selected from the group consisting of a metal, a metal oxide, a metal hydroxide, a metal nitride, a metal carbide, an allotrope of carbon, a resin, a dye, and a pigment. Examples thereof include: metals such as aluminum, silver, copper, and metal silicon; metal oxides such as alumina, zinc oxide, magnesium oxide, silicon dioxide, cerium oxide, and iron oxide; metal hydroxides such as aluminum hydroxide and cerium hydroxide; metal nitrides such as aluminum nitride and boron nitride; metal carbides such as silicon carbide; allotropes of carbon such as diamond, graphite, carbon nanotube, and graphene; resins such as silicone resin powder; dyes such as indigo; and pigments such as Bengala. To impart thermal conductivity to the composition, aluminum, silver, alumina, zinc oxide, and aluminum nitride are preferably used. To impart heat resistance, cerium oxide, cerium hydroxide, and iron oxide are preferably used. To impart a reinforcing property, silicon dioxide such as hydrophobic fumed silica is preferably used. To impart electric conductivity, silver, copper, and the allotrope of carbon are preferably used. To impart smoothness, silicone resin powder is preferably used. To impart designability, dyes or pigments such as indigo and Bengala are preferably used.

An average particle diameter of the filler is preferably within a range of 500 µm or less, more preferably within a range of 300 µm or less, and further preferably within a range of 150 µm or less because setting the average particle diameter to be less than 500 µm yields the more uniform composition. In addition, the average particle diameter is preferably 0.01 µm or more, and particularly preferably 0.1 µm or more. Note that the average particle diameter can be determined as a volume-average value (or a median diameter) in particle size distribution measurement with a laser-light diffraction method, for example. In addition, a shape of the filler is not particularly limited to spherical, irregular, needle, platelet, etc.

A blending amount of the component (C) is favorably within a range of 5,000 parts by mass or less, and preferably within a range of 2,000 parts by mass or less based on 100 parts by mass of the component (A) because the blending amount of 5,000 parts by mass or less provides not excessively high viscosity, handling ease, and the uniform composition. Note that, when the component (C) is blended, the blending amount is preferably 0.1 parts by mass or more, and particularly preferably 1 part by mass or more.

### [Component (D)]

The curable silicone composition of the present invention may further contain components other than the above (A) to (C) as a component (D) as necessary. For example, an organo(poly)siloxane having no reactivity, such as methylpolysiloxane, may be contained to regulate strength and viscosity of the composition. In addition, for a purpose of improving a filling property of the filler or a purpose of imparting adhesiveness to the composition, a hydrolysable organopolysiloxane, modified silicones, and a hydrolysable organosilane may be blended. Further, a solvent to regulate viscosity of the composition may be blended. Further, to prevent deterioration of the curable silicone composition, a conventionally known antioxidant such as 2,6-di-tert-butyl-4-methylphenol may be contained as necessary. Further, a flame retardant, a precipitation inhibitor, a thixotropy improver, etc. may be blended as necessary.

### [Method for manufacturing silicone composition]

A method for manufacturing a curable silicone composition in the present invention will be described. The method for manufacturing a curable silicone composition in the present invention is not particularly limited, but includes mixing: (A) an organopolysiloxane compound having a substituent represented by the following general formula (1) in a molecule: 100 parts by mass, 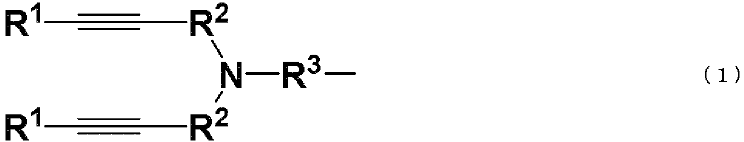 wherein R¹ independently represents a substituted or unsubstituted monovalent hydrocarbon group or a hydrogen atom, R² independently represents a substituted or unsubstituted divalent hydrocarbon group, and R³ represents a divalent linking group; and (B) a metal compound capable of catalyzing a [2+2+2] cycloaddition reaction: an effective amount. That is, the method has a producing step of mixing the curable silicone composition containing the above-described components (A) and (B), and the component (C) or other components in addition thereto as necessary.

Examples of the method include a method of mixing the above-described components (A) and (B), and the component (C) or other components in addition thereto as necessary by a mixing method using a mixer such as, Awatori Rentaro (THINKY CORPORATION's registered trademark), TRIMIX, TWIN MIX, and Planetary Mixer (all of them are trademarks of mixers manufactured by INOUE MFG., INC.), Ultra Mixer (a registered trademark of a mixer manufactured by MIZUHO INDUSTRIAL CO., LTD.), and HIVIS DISPER MIX (a registered trademark of a mixer manufactured by Tokushu Kika Kogyo Co., Ltd.) or by manual mixing using a spatula, etc. at 25°C for typically 3 minutes to 24 hours, preferably 5 minutes to 12 hours, particularly preferably 10 minutes to 6 hours. During the mixing, degassing may be performed.

An absolute viscosity of the curable silicone composition of the present invention measured at 25°C is preferably 0.1 to 1,000 Pa·s, more preferably 1 to 700 Pa·s, and further preferably 5 to 500 Pa·s. The viscosity of 0.1 Pa·s or more yields better operability such as better shape retaining. In addition, the viscosity of 1,000 Pa·s or less yields better operability such as facilitation of discharging and coating. The above viscosity can be obtained by regulating blending of the above-described components. In the present invention, the absolute viscosity is a value at 25°C measured with a Malcom viscometer (rotor A, 10 rpm, shearing rate: 6 [1/s]).

### [Silicone cured product]

The silicone cured product of the present invention is made by curing the above curable silicone composition.

A method for manufacturing this silicone cured product has steps of: mixing (A) an organopolysiloxane compound having a substituent represented by the following general formula (1) in a molecule: 100 parts by mass 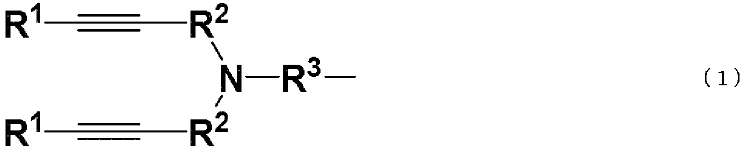 wherein R¹ independently represents a substituted or unsubstituted monovalent hydrocarbon group or a hydrogen atom, R² independently represents a substituted or unsubstituted divalent hydrocarbon group, and R³ represents a divalent linking group; and (B) a metal compound capable of catalyzing a [2+2+2] cycloaddition reaction: an effective amount; and curing the obtained mixture.

In addition, the method for curing the above curable silicone composition cures the composition containing: (A) an organopolysiloxane compound having a substituent represented by the following general formula (1) in a molecule: 100 parts by mass, 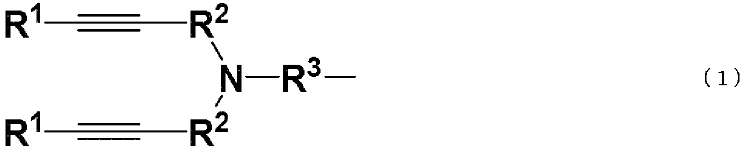 wherein R¹ independently represents a substituted or unsubstituted monovalent hydrocarbon group or a hydrogen atom, R² independently represents a substituted or unsubstituted divalent hydrocarbon group, and R³ represents a divalent linking group; and (B) a metal compound capable of catalyzing a [2+2+2] cycloaddition reaction: an effective amount.

A curing condition when the curable silicone composition of the present invention is cured is not particularly limited. The temperature is typically 0 to 200°C, preferably 10 to 150°C, and particularly preferably 20 to 100°C. The time is typically 3 minutes to 72 hours, preferably 5 minutes to 48 hours, and particularly preferably 10 minutes to 24 hours. A property after curing the curable silicone composition is not particularly limited, and examples thereof include gel, low-hardness rubber, and high-hardness rubber.

At this point, JP 2015-93958 A discloses an organopolysiloxane composition containing: an organopolysiloxane having an amic acid structure having a carbon-carbon triple bond; and a non-platinum catalyst to enhance a trimerization-cyclization reaction. Although the patent document describes that the composition can be cured by heating, the curing requires a high temperature of 150 to 250°C, and further requires heating at 250°C to change the amic acid structure into a phthalimide structure. Due to the high-temperature curing property as above, there is a problem of no applicability for a composition containing a component that is weak to heat and that cannot be exposed to high temperature in mounting. In contrast, (A) the organopolysiloxane compound in the curable silicone composition of the present invention has no amic acid structure and can yield the silicone composition that can be cured under a gentle condition of lower temperature, specifically 100°C or lower, which has an advantage of curability even when a component weak to heat is used.

The silicone cured product of the present invention is an elastic material, and the silicone itself has excellent heat resistance and chemical resistance. Thus, the silicone cured product of the present invention is useful as a silicone elastomer used as a coating agent, a sealing agent, and a sealant for a semiconductor element.

The curable silicone composition of the present invention is a liquid silicone composition in use, and the curing can proceed under a gentle condition in the presence of the catalyst to form the silicone elastomer.

The present invention adopts the [2+2+2] cycloaddition reaction of alkynes, which forms a carbon-carbon bond by the multiple bonds with each other using a metal as the catalyst, as the curing system. The [2+2+2] cycloaddition reaction, which is a reaction of forming an aromatic ring from three triple bonds, causes no byproduct gas in the reaction, and is an extremely useful reaction. The present invention is the first practical example in which this reaction is applied for the organopolysiloxane compound or the cured product thereof. In addition, both the desired operability and curing property can be achieved by appropriately selecting the catalyst.

Specifically, since being cured with the catalytic [2+2+2] cycloaddition reaction, the composition of the present invention exhibits excellent curability and can yield the cured product having a good property compared with conventional addition reaction using radicals, addition reaction by hydrosilylation, and condensation reaction. That is, the composition of the present invention has novel excellent curing properties such that: (I) differing from the radical addition reaction, generating an initiating species does not require high temperature, curing can be achieved at normal temperature or by heating, and surface curability becomes excellent because curing inhibition due to oxygen hardly occurs; (II) the addition reaction mechanism differs from hydrosilylation, and curing failure hardly occurs even when sulfur, phosphorus, a nitrogen compound, water, an organic metal salt, etc. are mixed or contacted; and (III) differing from the condensation reaction, the curing can be achieved at normal temperature even without utilizing moisture in the air, no gas is generated in curing, decrease in volume does not occur, and depth-curability is excellent.

Since the curable silicone composition of the present invention can be cured under a gentle condition of 100°C or lower even when a catalyst stable at normal temperature is used, it can be cured even when a component that is weak to heat and that cannot be exposed to high temperature in mounting is used, and has high utility value as a material used around electric and electronic components and semiconductor elements. Even under a gentler condition, the curing can be achieved smoothly by using a highly active catalyst.

### EXAMPLE

Hereinafter, the present invention will be described in more detail with showing Examples and Comparative Examples, but the present invention is not limited to the following Examples.

Note that, in the following, a kinematic viscosity at 25°C is a value measured as noted above, a catalyst concentration is based on mass in terms of a center metal atom based on the entire composition, an average particle diameter is a volume-based average value in particle size distribution measurement with a laser-light diffraction method, and in structural formulae described in Examples, Me represents a methyl group.

First, the following components were prepared to prepare the curable silicone composition of the present invention.

### Component (A)

A-1: Organopolysiloxane represented by the following formula (3) and having a kinematic viscosity at 25°C of 450 mm²/s 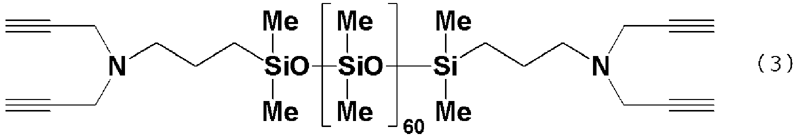
A-2: Organopolysiloxane represented by the following formula (4) and having a kinematic viscosity at 25°C of 80 mm²/s 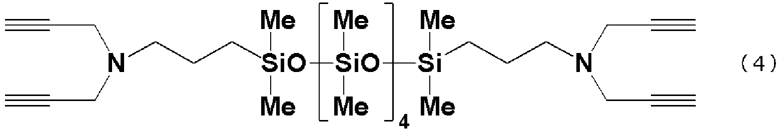
A-3: Organopolysiloxane represented by the following formula (5) and having a kinematic viscosity at 25°C of 140 mm²/s 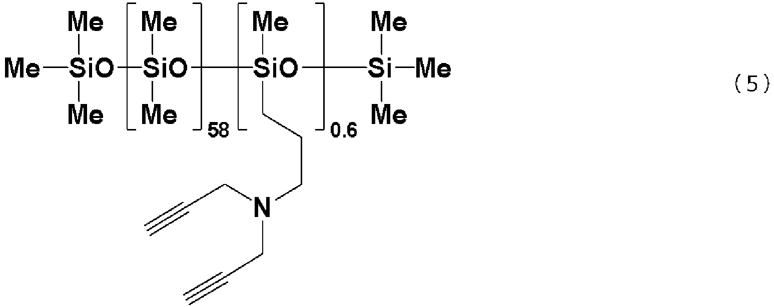
a-4 (Comparative): Dimethylpolysiloxane having both terminals blocked with an ethynyl group and having a kinematic viscosity at 25°C of 600 mm²/s (not corresponding to the component (A) of the present invention)

### Component (B)

B-1: A solution of tris(dibenzylideneacetone)dipalladium(0) dissolved in methylene chloride (catalyst concentration: 1 mass%)
B-2: A solution of tris(dibenzylideneacetone)dipalladium(0) dissolved in dimethylpolysiloxane having both terminals blocked with a trimethylsilyl group and having a kinematic viscosity at 25°C of 50,000 mm²/s (catalyst concentration: 5 mass%)

### Component (C)

C-1: Aluminum oxide powder having an average particle diameter of 10 µm
C-2: Zinc oxide powder having an average particle diameter of 0.4 µm

### Component (D)

D-1: A hydrolysable organosilane represented by the following formula (6)

C₁₀H₂₁Si(OMe)₃ (6)

### [Examples 1 to 8 and Comparative Examples 1 to 4]

### Preparation of curable silicone composition [1]

The above-described components (A) and (B) were mixed by manual mixing using a spatula at blending amounts shown in the following Table 1 to prepare a curable silicone composition. As for the obtained silicone composition, a property of the composition cured under a temperature condition shown in the following Tables 1 to 2 was determined. Tables 1 to 2 show the results.

**[Table 1]**

| | Example 1 | Example 2 | Example 3 | Example 4 | Example 5 | Example 6 |
|---|---|---|---|---|---|---|
| A-1 (parts by mass) | 10 | 10 | 10 | 10 | 10 | 10 |
| A-2 (parts by mass) | | | | | | |
| a-4 (parts by mass) | | | | | | |
| B-1 (parts by mass) | 1.3 | 1.3 | 1.3 | 1.3 | 3.2 | 6.5 |
| B-2 (parts by mass) | | | | | | |
| curing temperature | 150°C | 80°C | 60°C | 25°C | 25°C | 25°C |
| curing time | 0.5 hours | 1 hour | 3 hours | 48 hours | 24 hours | 6 hours |
| property | rubber | rubber | rubber | rubber | rubber | rubber |

**[Table 2]**

| | Example 7 | Example 8 | Comparative Example 1 | Comparative Example 2 | Comparative Example 3 | Comparative Example 4 |
|---|---|---|---|---|---|---|
| A-1 (parts by mass) | | 10 | 10 | | | |
| A-2 (parts by mass) | 10 | | | | | |
| a-4 (parts by mass) | | | | 10 | 10 | 10 |
| B-1 (parts by mass) | 3.2 | | | 1.3 | 1.3 | |
| B-2 (parts by mass) | | 3.2 | | | | 3.2 |
| curing temperature | 25°C | 25°C | 150°C | 150°C | 25°C | 25°C |
| curing time | 24 hours | 48 hours | 1.5 hours | 1.5 hours | 168 hours | 168 hours |
| property | rubber | rubber | liquid | rubber | liquid | liquid |

From the above results, the silicone compositions of the present invention in Examples 1 to 8 can be cured into rubber for a short time of 0.5 hours at a high temperature of 100°C or higher, and within 48 hours even at a relatively low temperature of lower than 100°C. From Comparative Example 1, it is understood that the organopolysiloxane compound satisfying the requirement of the present invention is not a singly curable organopolysiloxane compound because the curing did not occur when the metal catalyst to catalyze the [2+2+2] cycloaddition reaction was not contained. Compositions in Comparative Examples 2 to 4 were silicone compositions using the dimethylpolysiloxane having both terminals blocked with an ethynyl group. These compositions in Comparative Examples can be cured into rubber by heating at a high temperature of 150°C, but are liquid at a relatively low temperature of 25°C even after 168 hours. It is understood that these compositions have poor curability at normal temperature.

Therefore, it is understood that the organopolysiloxane compound of the present invention is curable into rubber by mixing the metal catalyst capable of catalyzing the [2+2+2] cycloaddition reaction, and is curable at a curing temperature of a high temperature of 100°C or higher, of course, and at a relatively low temperature of lower than 100°C.

### [Examples 9 to 13 and Comparative Example 5]

### Preparation of curable silicone composition [2]

The above-described components (A), (B), (C), and (D) were mixed with Awatori Rentaro (manufactured by THINKY CORPORATION) at blending amounts shown in the following Table 3 to prepare a curable silicone composition. As for each of the obtained curable silicone compositions, a property of the composition cured under a temperature condition shown in the following Table 3 was determined. Table 3 shows the results.

**[Table 3]**

| | Example 9 | Example 10 | Example 11 | Example 12 | Example 13 | Comparative Example 5 |
|---|---|---|---|---|---|---|
| A-1 (parts by mass) | 10.4 | 10.4 | 10.4 | | | |
| A-2 (parts by mass) | | | | 10.4 | | |
| A-3 (parts by mass) | | | | | 10.4 | |
| a-4 (parts by mass) | | | | | | 10.4 |
| B-2 (parts by mass) | 0.1 | 0.1 | 1 | 0.1 | 0.1 | 1 |
| C-1 (parts by mass) | 77 | 77 | 77 | 77 | 77 | 77 |
| C-2 (parts by mass) | 33 | 33 | 33 | 33 | 33 | 33 |
| D-1 (parts by mass) | 0.6 | 0.6 | 0.6 | 0.6 | 0.6 | 0.6 |
| curing temperature | 150°C | 60°C | 25°C | 60°C | 60°C | 25°C |
| curing time | 0.5 hours | 1.5 hours | 24 hours | 6 hours | 6 hours | 168 hours |
| property | rubber | rubber | rubber | rubber | rubber | liquid |

From the above results, the silicone compositions of the present invention in Examples 9 to 13 can be cured into rubber for a short time of 0.5 hours at a high temperature of 100°C or higher, and within 24 hours even at a relatively low temperature of lower than 100°C. The composition in Comparative Example 5 was a silicone composition using the dimethylpolysiloxane having both terminals blocked with an ethynyl group. This composition is liquid at a relatively low temperature of 25°C even after 168 hours, and it is understood that this composition has poor curability at normal temperature.

Therefore, it is understood that the organopolysiloxane compound of the present invention is curable into rubber by mixing the metal catalyst capable of catalyzing the [2+2+2] cycloaddition reaction even when a large amount of the filler is contained, and curable at a curing temperature of a high temperature of 100°C or higher, of course, and at a relatively low temperature of lower than 100°C.

The present description includes the following embodiments.
[1] A curable silicone composition, comprising:
   (A) an organopolysiloxane compound having a substituent represented by the following general formula (1) in a molecule: 100 parts by mass, 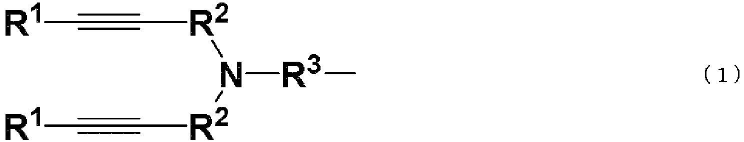 wherein R¹ independently represents a substituted or unsubstituted monovalent hydrocarbon group or a hydrogen atom, R² independently represents a substituted or unsubstituted divalent hydrocarbon group, and R³ represents a divalent linking group; and
   (B) a metal compound capable of catalyzing a [2+2+2] cycloaddition reaction: an effective amount.
[2] The curable silicone composition of the above [1], wherein R² in the general formula (1) represents a methylene group.
[3] The curable silicone composition of the above [1] or [2], wherein R¹ in the general formula (1) represents a hydrogen atom.
[4] The curable silicone composition of any one of the above [1] to [3], wherein the component (A) is an organopolysiloxane compound having two or more of the substituent represented by the general formula (1) in average in one molecule.
[5] The curable silicone composition of any one of the above [1] to [4], further comprising (C) one or more inorganic fillers or organic fillers at 0.1 to 5,000 parts by mass based on 100 parts by mass of the component (A).
[6] The curable silicone composition of any one of the above [1] to [5], wherein the component (C) is a filler composed of one or more materials selected from the group consisting of a metal, a metal oxide, a metal hydroxide, a metal nitride, a metal carbide, an allotrope of carbon, a resin, a dye, and a pigment.
[7] A silicone cured product which is made by curing the curable silicone composition of any one of the above [1] to [6].
[8] A method for manufacturing a curable silicone composition, the method comprising the step of mixing:
   (A) an organopolysiloxane compound having a substituent represented by the following general formula (1) in a molecule: 100 parts by mass, 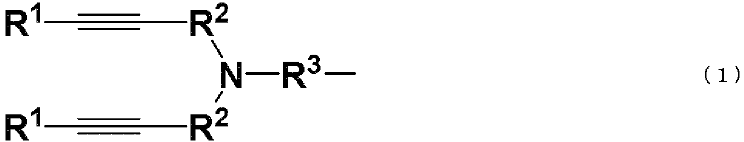 wherein R¹ independently represents a substituted or unsubstituted monovalent hydrocarbon group or a hydrogen atom, R² independently represents a substituted or unsubstituted divalent hydrocarbon group, and R³ represents a divalent linking group; and
   (B) a metal compound capable of catalyzing a [2+2+2] cycloaddition reaction: an effective amount.

It should be noted that the present invention is not limited to the above-described embodiments. The above-described embodiments are just examples, and any examples that substantially have the same feature and demonstrate the same functions and effects as those in the technical concept described in claims of the present invention are included in the technical scope of the present invention.

## Claims

1. A curable silicone composition, comprising:
(A) an organopolysiloxane compound having a substituent represented by the following general formula (1) in a molecule: 100 parts by mass, 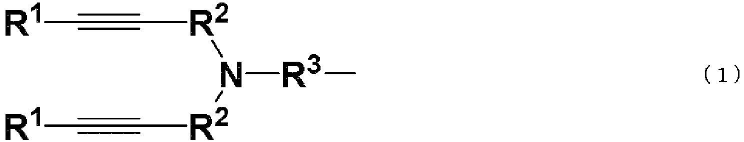 wherein R¹ independently represents a substituted or unsubstituted monovalent hydrocarbon group or a hydrogen atom, R² independently represents a substituted or unsubstituted divalent hydrocarbon group, and R³ represents a divalent linking group; and
(B) a metal compound capable of catalyzing a [2+2+2] cycloaddition reaction: an effective amount.

2. The curable silicone composition according to claim 1, wherein R² in the general formula (1) represents a methylene group.

3. The curable silicone composition according to claim 1, wherein R¹ in the general formula (1) represents a hydrogen atom.

4. The curable silicone composition according to claim 1, wherein the component (A) is an organopolysiloxane compound having two or more of the substituent represented by the general formula (1) in average in one molecule.

5. The curable silicone composition according to any one of claims 1 to 4, further comprising (C) one or more inorganic fillers or organic fillers at 0.1 to 5,000 parts by mass based on 100 parts by mass of the component (A).

6. The curable silicone composition according to claim 5, wherein the component (C) is a filler composed of one or more materials selected from the group consisting of a metal, a metal oxide, a metal hydroxide, a metal nitride, a metal carbide, an allotrope of carbon, a resin, a dye, and a pigment.

7. A silicone cured product which is made by curing the curable silicone composition according to any one of claims 1 to 4.

8. A silicone cured product which is made by curing the curable silicone composition according to claim 5.

9. A method for manufacturing a curable silicone composition, the method comprising the step of mixing:
(A) an organopolysiloxane compound having a substituent represented by the following general formula (1) in a molecule: 100 parts by mass, 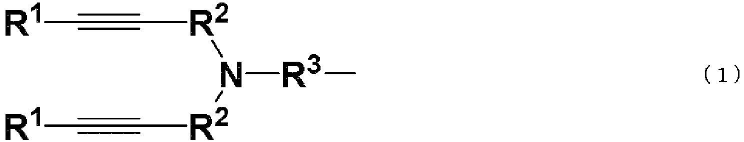 wherein R¹ independently represents a substituted or unsubstituted monovalent hydrocarbon group or a hydrogen atom, R² independently represents a substituted or unsubstituted divalent hydrocarbon group, and R³ represents a divalent linking group; and
(B) a metal compound capable of catalyzing a [2+2+2] cycloaddition reaction: an effective amount.
